# EUROPEAN PATENT SPECIFICATION

(11) **EP 0 599 389 B1**
(45) Date of publication and mention of the grant of the patent: **07.10.1998**
(21) Application number: 93203201.4
(22) Date of filing: 16.11.1993
(51) Int. Cl.: G11B 20/18, G11B 11/10, G11B 27/36, G11B 7/125, G11B 7/00

(54) **Method and recording device for recording signals on a record carrier**
Verfahren und Vorrichtung zur Aufzeichnung von Signalen auf einen Aufzeichnungsträger
Méthode et dispositif d'enregistrement de signaux sur un support d'enregistrement

(30) Priority: 20.11.1992 EP 92203585
(43) Date of publication of application: 01.06.1994
(73) Proprietor: Koninklijke Philips Electronics N.V., 5621 BA Eindhoven (NL)
(72) Inventor: Bakx, Johannes Leopoldus, NL-5656 AA Eindhoven (NL); Spruit, Johannes Hendrikus Maria, NL-5656 AA Eindhoven (NL); Veldhuis, Hindrik, NL-5656 AA Eindhoven (NL)
(74) Representative: Groenendaal, Antonius Wilhelmus Maria

(56) References cited:
- EP-A- 0 284 273
- EP-A- 0 400 726
- EP-A- 0 430 649
- US-A- 5 050 156

## Description

The invention relates to a method of recording signals on a record carrier of a type that can be overwritten, according to the preamble of claim 1.

The invention further relates to a recording device for recording signals in substantially parallel tracks on a record carrier of a type that can be overwritten according to the preamble of claim 5.

Such a method and apparatus are disclosed by EP-A-0430649. This publication describes a method of determining the optimal recording power for an optical disk apparatus. Specifically, the apparatus, which records a signal on a recording medium through the projection of a laser beam at two levels of bias power and peak power, initially records a signal on an assessment track by decreasing the peak power progressively, with the bias power being fixed, determines the lower-limit peak power based on peal power immediately before the reproduced signal is first judged to be unsatisfactory by reproduced signal quality discrimination means, subsequently records a signal by decreasing the bias power progressively, with the peak power being fixed, determines the lower-limit bias power based on bias power immediately before the reproduced signal is first judged to be unsatisfactory by the reproduced signal quality discrimination means adds prescribed powers to the low-limit peak power and bias power for the optical disk apparatus, and prefers the recording of user data with the optimal peak power and optimal bias power.

A similar method and device for recording signals on the record carrier is known from European Patent Application published under No. 0 400 726. The method and recording device described in that European Patent Application give a procedure for media calibration by which a recording intensity is determined for a radiation beam by which information patterns are introduced in the recording layer of a record carrier. The described media calibration comprises the following procedure steps:
a. an information pattern having a first frequency is recorded in a track with a maximum recording intensity of the radiation beam;
b. then, in the same track, a second information pattern having a second frequency is recorded with a low, minimum recording intensity of the radiation beam;
c. the information recorded in the track is read out after which the read signal is applied to a detection mechanism tuned to the frequency of the first signal;
d. if signal rests of the first information pattern having the first frequency are still detected, steps b to d are repeated, the recording intensity for each repetition being increased by a specific desired randomly selectable step.
Once rests of the first information pattern having the first frequency have no longer been detected in procedure step d, an intensity setting of the radiation beam is found at which there is a guaranteed minimum error rate of the information pattern to be recorded and subsequently read out.

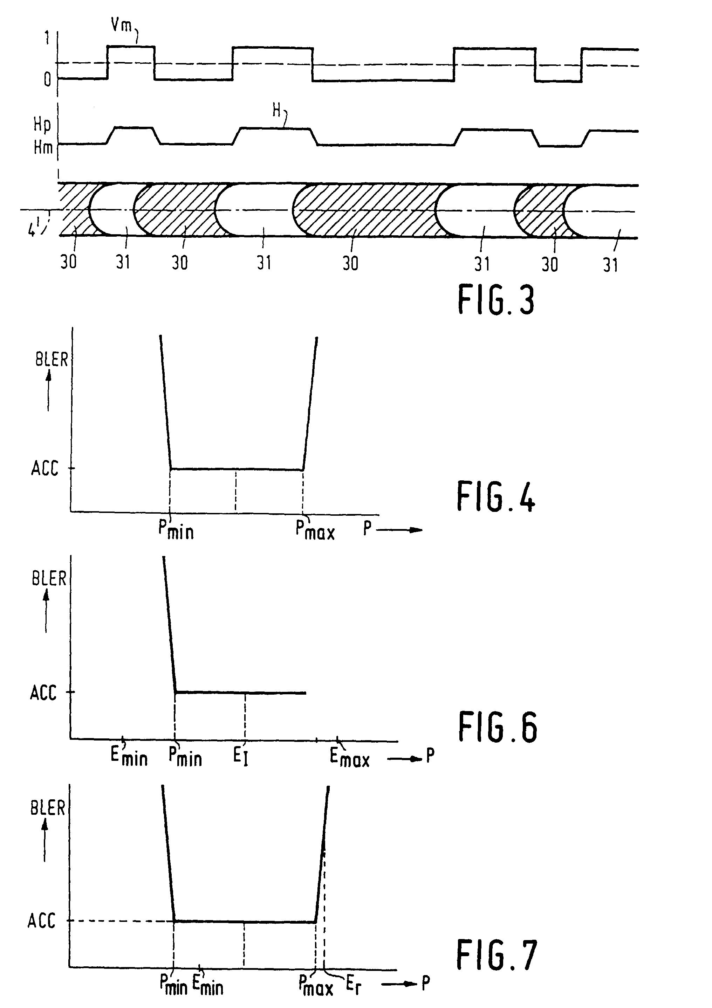

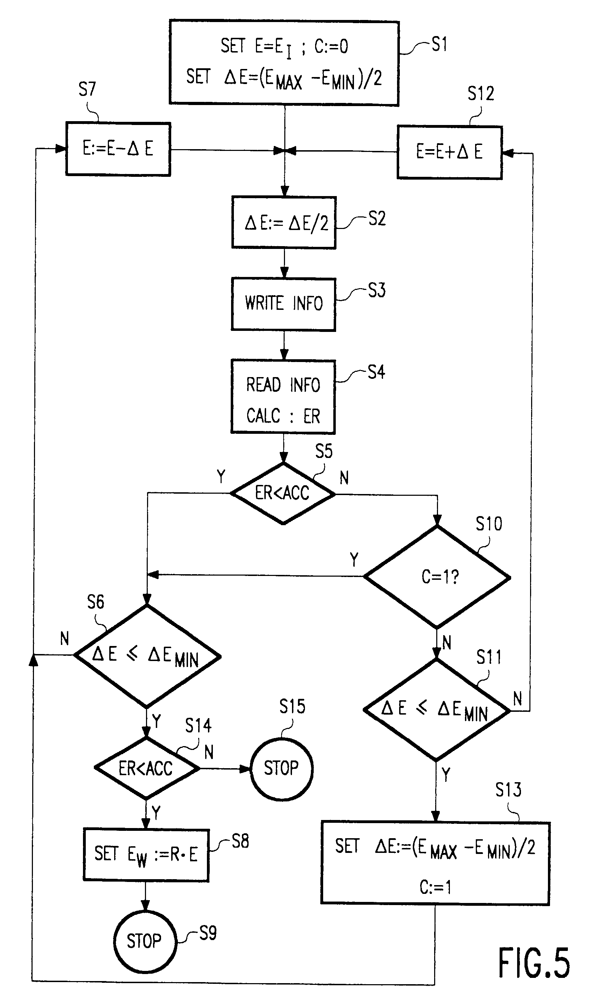

Above matter is illustrated with reference to Figs. 7 and 8 of said Application, with Fig. 8 representing an error rate characteristic as a function of the intensity of the radiation beam used for recording. As has been explained in the application, the method and device described therein provide a setting of the radiation intensity which is situated substantially in the middle of the flat domain of the error rate characteristic in which the error rate is low.

Although the described method and recording device as defined in European Patent Application 0 400 726 provide a highly reliable recording of information patterns, with a very low error rate, there are nevertheless several inherent disadvantages, for example:
- specially designed hardware is necessary for generating the information patterns having a first and a second frequency and for detecting the rest of the first information having the first frequency;
- a further disadvantage is that the first information pattern having the first frequency is recorded with full power of the laser diode which generates the radiation beam. Having the laser diode operated full power is disadvantageous in that this shortens its useful life.

EP-A-0284273 describes a method of writing data in a track on an optical card, i.e. a medium that cannot be overwritten, by projecting a writing laser beam whose output power is modulated in accordance with the data to be recorded, immediately after writing the data with the aid of the writing laser beam having a nominal value A₃, the data is read out of the optical card to confirm whether the data has been correctly written or not. If the data is not correctly written on the optical card, the same data is written again in another track on the optical card with the aid of the writing laser beam whose output power is changed into a higher level A₄. Immediately after this second writing, the data is read out of the optical card to check whether the data has been correctly recorded or not. The data writing operation is repeated by a predetermined number of times by changing the level of the output power of the writing laser beam successively in the order of A₃, A₄, A₂, A₅, A₁, wherein A₁<A₂<A₃<A₄<A₅ and A₃ is the nominal level of the output power of writing laser beam.

It is one of the objects of the invention to improve the known methods and recording devices in such a way that the optimum setting for the recording intensity can be found very rapidly.

A method according to the invention is thereto characterized, by the features of the characterizing part of claim 1.

The method according to the invention utilizes the error detection and correction algorithm already used when signals are recorded. If a recorded information pattern is read out and processed by means of the error correction and detection algorithm, after the test information pattern has been recorded, which is derived from a randomly or freely selectable data pattern, the magnitude of the error rate in the known data pattern can be established. By means of the found error rate the setting of the radiation beam stepwise can be adjusted in the desired direction of intensity, each successive step being smaller than the previous one.

A recording device according to the invention is characterized by the features of the characterizing part of claim 5.

A recording device according to the invention utilizes a programmed data processing means already used in the recording device, for encoding data patterns by means of an error detection and correction algorithm and for decoding recorded signal patterns by means of the error detection and correction algorithm. When a read out information pattern is decoded, an error rate is determined on the basis of which stepwise a setting signal for setting means to set the beam intensity of the radiation source is found,the step size for the modification of the beam intensity being reduced for each successive step.

The embodiment with automatic optimum setting of the beam intensity is especially suitable for recording devices in which the recording of the marks strongly depends on the recording intensity like, for example, in magnetooptical recording devices. However, the invention is not restricted to magnetooptical recordings but may alternatively be applied to other recording principles, such as, for example, recordings that can be overwritten on record carriers of the phase-change type, for which a record carrier is used whose structure, when scanned by a radiation beam, can be changed from amorphous to crystalline and *vice vers*a depending on the radiation method.

Further embodiments as well as advantages thereof will be described in detail with reference to the drawing Figures 1 to 5, in which:
Figs. 1a and 1b show a record carrier,
Fig. 2 shows a magnetooptical device according to the invention,
Fig. 3 shows a recording signal and the associated information pattern,
Fig. 4 shows reading reliability as a function of recording intensity,
Fig. 5 shows a flow chart of a preferred embodiment for a method of setting the recording intensity according to the invention,
Fig. 6 shows a first situation of an initial recording intensity with respect to the recording window in the error rate characteristic, and
Fig. 7 shows a further situation of an initial recording intensity relative to the recording window.

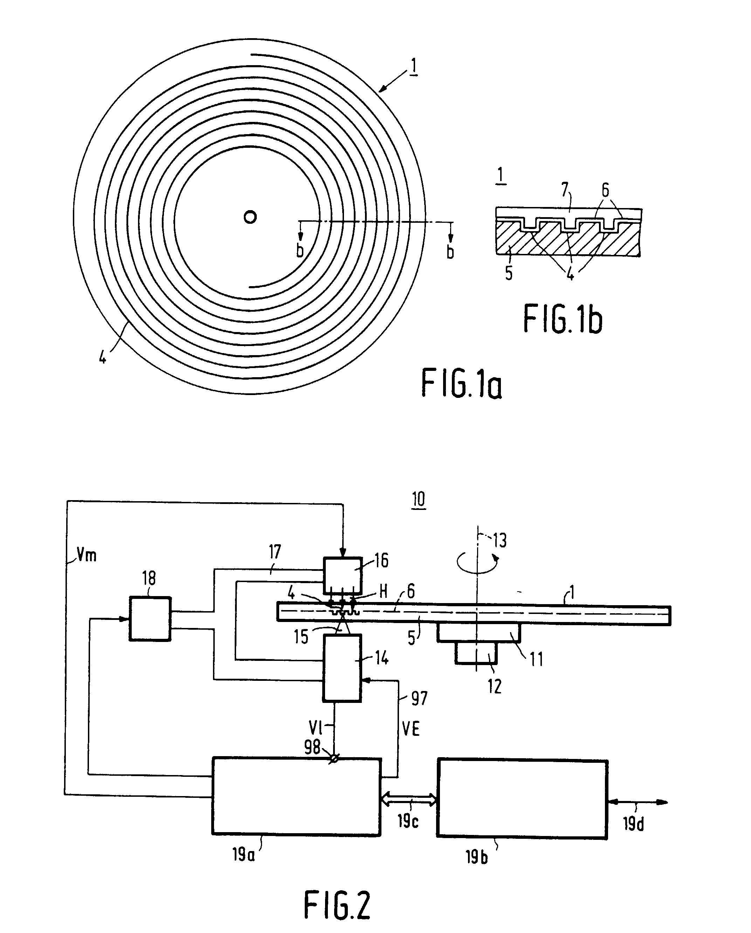

Fig. 1 shows an embodiment of a record carrier 1 of a type that can be overwritten, in which Fig. 1a shows the top elevation and Fig. 1b shows a small part of the section along line b-b. The record carrier 1 comprises a track pattern presenting information areas located substantially concentrically relative to each other, which areas are intended for recording information in the form of information patterns of optically detectable marks. The track pattern may consist, for example, of a continuous helical servo-track 4 denoting the middle of the information areas. The concentric information areas, however, may also be denoted by a structure of commonly termed servo-patterns, as has been described, for example, in Dutch Patent Application NL-A 8702905 (PHN 12.339). For recording purposes the record carrier 1 comprises a recording layer 6 deposited on a transparent substrate 5 and covered by a protective coating 7. The recording layer 6 is of a material suitable for magneto-optical recording. There should be observed that information layer 6 may, however, also consist of a different material, for example, a commonly termed phase-change material, whose structure may be changed from amorphous to crystalline and *vice versa* by suitable radiation methods.

Fig. 2 shows an embodiment of a magnetooptical recording device 10 according to the invention for recording information on the record carrier 1. The recording device 10 comprises a turntable 11 and a drive motor 12 for causing the record carrier 1 to rotate around an axis 13. Opposite to the rotating record carrier 1 is installed an optical read/write head 14 of a customary type suitable for magnetooptical recording and reading, with which a radiation beam 15 is focused on the recording layer 6. The recording device 10 comprises customary servo-tracking means (not shown) for keeping the radiation beam 15 focused on the servo-track 4, customary focusing means for keeping the radiation beam 15 focused on the recording layer 6 and customary addressing means for retrieving *via* a specific address, as has been described, for example, in EP-A 0 265 904 and NL-A 8800151 (PHN 12.063 and PHN 12.398). Opposite to the read/write head 14, on the other side of the record carrier 1, a magnetic field modulator 16 is installed for generating a magnetic field H directed substantially perpendicularly to the recording layer 6 in the area of the recording layer 6 radiated by the radiation beam 15. The magnetic field modulator 16 is rigidly attached to the read/write head 14 by means of a bracket 17. The read/write head 14 as well as the magnetic field modulator 16 may be moved radially relative to the record carrier by means of a displacement system 18, the bracket 17 providing that the magnetic field modulator 16 continues to be positioned opposite to the read/write head. The magnetic field modulator 16 is one of a type in which the direction of the generated magnetic field can be modulated in accordance with a binary recording signal Vm. Such a magnetic field modulator has been described in detail, for example, in Dutch Patent Application no. 8702451 (PHN 12.294).

The device 10 further includes a control circuit 19a for controlling the read/write head 14, the displacement system 18 and for generating the recording signal Vm. When information is recorded, the servo-track 4 is scanned by the radiation beam 15 whose intensity is set to a recording intensity sufficiently high for heating up the part of the record carrier 6 scanned by the radiation beam 15 near to the Curie temperature of the material of the recording layer 6. At the same time the recording signal Vm and hence the generated magnetic field H, is modulated in accordance with the information to be recorded, as a result of which a pattern of marks in the form of magnetic domains occurs in the scanned part of the servo-track 4 which pattern corresponds to the recording signal Vm. The domains thus realised may be detected optically as will be further described in detail.

Essential to the recording device 10 according to the invention are the signal processing means 19b which are coupled to the control circuit 19a *via* a two-way data bus 19c. The data bus 19c may be a serial (1-bit-wide) or a parallel (multibit-wide) data bus. The signal processing means 19b receive *via* a two-way (input and output) bus 19d a data pattern which is encoded by means of an error detection and correction algorithm (CIRC or other Reed-Solomon code) in the programmed processing means 19b. The information pattern thus obtained is applied to the control means 19a *via* the bus 19c, and so is a setting for the recording intensity of the radiation beam 15 with which the information pattern is recorded in the recording layer 6 of the record carrier 1.

An information pattern read out with the read/write head and having signal shape V1 is transferred by the control circuit 19a over the bus 19c to the processing means 19b which attempt to encode the data pattern from the information pattern by means of the error detection and correction algorithm. The processing means 19b establish an error rate occurring in the data pattern and, on the basis of the error rate, determine a setting signal for setting the recording intensity of the radiation beam 15. The control circuit 19a thereto receives the setting signal over bus 19c.

Fig. 3 illustrates the variation with time of the recording signal Vm, the associated magnetic field H and the consequent pattern of magnetic domains with different directions of magnetization. The domains with different directions of magnetization are denoted by different reference characters, that is to say, 30 and 31. The middle of the servo-track 4 in which the pattern is recorded is diagrammatically shown by a line 4'. The pattern of magnetic domains 30, 31 may be read out by the read/write head 14 which thereto scans the pattern with a scanning beam of linearly polarized light. Upon reflection of the radiated beam the polarization direction of the radiated beam is turned in a direction determined by the direction of the magnetization of the scanned portion of the recording layer 6. In this manner a modulation pattern of variations of polarization directions is obtained, which pattern corresponds to the scanned pattern of the magnetic domains 30, 31. This modulation is detected in a customary fashion in the read/write head 14 with the aid of, for example, a Wollaston prism, photoelectric converters and an amplifier circuit which converts the output signals of the photoelectric converters into a reading signal V1 which represents the read out pattern as has been described, for example, in Dutch Patent Application NL-A 8602304 (PHQ 86.017).

One of the major aspects for recording is the reliability with which the recorded information can again be read out. A known magnitude in which the reading reliability can be expressed for recorded CD-A or CD-ROM signals is the so-termed "(Block) Error Rate" ((BL)ER for short). The magnitude (BL)ER denotes the number of (EFM) blocks per unit of time in which one or more uncorrectable errors have been detected by means of the error detection and correction algorithm.

Fig. 4 shows the behaviour of the BLER value as a function of the recording intensity P. It appears that the BLER value within a range from Pₘᵢₙ to Pₘₐₓ substantially adopts a constant minimum value, whereas outside this range the BLER value rapidly increases. Between the values Pₘᵢₙ and Pₘₐₓ the reading reliability is substantially insensitive to intensity variations which are unavoidable as a result of the variety of tolerances in the recording system.

Fig. 4 shows the error rate BLER as a function of the recording intensity P for a specific scanning velocity of the track 4 during recording. The optimum recording intensity is thus not situated midway between Pₘᵢₙ and Pₘₐₓ, but just above Pₘᵢₙ. The value of the optimum recording intensity may be determined in advance for a specific record carrier. Prior to the recording of the information on this record carrier the recording intensity of the recording device may then basically be set at this value.

However, the following problems will then occur:
1) There is a large variation in the radiation sensitivity of recording layers, even though they are made of the same magnetooptical material. This is caused by the customarily applied method of depositing the recording layer, such as, for example, by sputtering.
2) There is a great influence of the scanning velocity on the optimum recording intensity. This is especially a problem if the recording velocity for various recording devices varies strongly, as is the case, for example, with recording devices for CD signals in which the permissible recording velocity is situated between 1.2 m/sec and 1.4 m/sec.
3) Accurately determining an absolute radiation power is a great problem in practice. The mutual spread of power meters is of the order of 10%. In addition, different adjustment conditions cause additional deviations to occur.
4) Finally, the shape of the scanned spot caused by the radiation beam on the recording layer 6 and the wavelength of the radiation likewise influence the optimum recording intensity.

All this means that the variation in the optimum recording intensity is so large that there cannot be guaranteed that for a fixed setting of the recording intensity this recording intensity lies within the recording window of the record carrier in which the BLER value is low.

In the following a method will be described in which the optimum recording intensity can be set reliably and simply. First a preferred embodiment of a method according to the invention will be described with reference to Fig. 5 in which a flow chart of this preferred embodiment is shown.

Fig. 5 shows the flow chart representing the preferred embodiment of a method according to the invention, by which an optimum setting of the recording intensity for the radiation beam 15 in a recording device as shown in Fig. 2 is found. In a first step S₁ an initial recording intensity E_{I} for the proposed method as well as an initial step size ΔE, which denotes the change in the recording intensity E, are set. Said step size ΔE is (Eₘₐₓ-Eₘᵢₙ/2. Herein Eₘₐₓ and Eₘᵢₙ are the top and bottom limit respectively, of the setting range of the intensity E of the radiation beam 15. In a next step S₂ of the method the step size ΔE is halved. With these two steps the following is obtained. The initial recording intensity E_{I} is selected to be in the middle of the setting range of the write head 14. By setting the step size ΔE, in step S₂, there is achieved that with a next setting of the recording intensity E the latter will be either the minimum intensity Eₘᵢₙ plus a quarter of the total setting range, or the maximum intensity Eₘₐₓ minus a quarter of the setting range. In step S₃ information is recorded on the record carrier with the set recording intensity E. In a next step, S₄, of the method the information is read from the record carrier and the error rate ER is determined on the basis of the read out information. In a next step, S₅, there is determined whether the error rate ER lies below an acceptable level ACC. In a next step, S₆, there is tested whether, if the error rate ER lies below a desired level ACC, the step size ΔE is smaller than a minimum step size ΔEₘᵢₙ. If this is not the case, the recording intensity E is adjusted with the step size ΔE, in a next step S₇, after which the steps S₂, S₃, S₄ and S₅ are repeated. If, still in step S₅, it appears that the error rate ER is smaller than the acceptable level ACC, again in step S₆ there is tested whether the step size ΔE lies below the minimum step size ΔEₘᵢₙ. If that is the case, the desired recording intensity E_{W} is set in a next step S₈, subsequent to a step S₁₄, in which there is tested whether the error rate ER lies below an acceptable level ACC, which recording intensity is equal to a constant R multiplied by the recording intensity E set at that moment. The constant R is a factor larger than 1.1 and smaller than 2.2. In magnetooptical recording this factor preferably lies between the boundaries 1.5 and 1.7. Once this desired recording intensity E_{W} has been set, the program stops at step S₉. The part of the method according to the invention and described hereinbefore determines the bottom Pₘᵢₙ of the recording window represented in Fig. 4, because there has been assumed that the initial setting of the recording intensity E_{I} is situated somewhere in the window between Pₘᵢₙ and Pₘₐₓ.

Fig. 6 shows in this situation the initial recording intensity E_{I} with respect to the recording window between Pₘᵢₙ and Pₘₐₓ. It will be evident that since in step S₇ the set recording intensity is constantly reduced by a step size ΔE, once a specific step has been taken, the recording intensity E at that moment may be below the threshold Pₘᵢₙ of the recording window. This will appear in a next calculation of the error rate in step S₄ and the test in step S₅ in which the error rate ER is tested relative to the acceptable error level ACC. In this case step S₅ will be followed by step S₁₀ in which there is tested whether a counter is set and has the value of unity. In the following this will be further explained. If this counter has not been set, there is tested in step S₁₁ whether the step size ΔE in recording intensity is smaller than or equal to the minimum step size to be taken ΔEₘᵢₙ. If this is not the case, the recording intensity E is increased by the step ΔE in a subsequent step S₁₂. With this newly set recording intensity E, after the intensity step size ΔE has been adjusted in step S₂, the shifting of the information in step S₃ and the reading of the information in step S₄, again the error rate ER is determined and in step S₅ there is tested whether this error rate ER lies below the acceptable level ACC. In the manner described hereinbefore the corner Pₘᵢₙ in the error rate characteristic and the associated recording intensity E are found very rapidly. The thus found recording intensity E is used as a basis for determining a desired recording intensity E_{W} which is found by multiplying the recording intensity E by a constant R. The result is that information on the record carrier 6 is recorded with an intensity exceeding the minimum recording intensity Pₘᵢₙ, with which the information can still be read out with an acceptable error rate ACC.

Above-described method works out correctly as long as the initial recording intensity E_{I} lies within the recording window or below the minimum recording intensity Pₘᵢₙ. The case where the initial recording intensity E_{I} lies above Pₘₐₓ, that is the corner between the recording window and the rising part of the error rate characteristic, will cause a setting of the write head 14 to occur in the method described hereinbefore, in which the radiation beam 15 is given an ever higher recording intensity. This means that the setting control works the wrong way. Therefore, after a number of iteration steps have been made, in which the intensity step size ΔE is constantly reduced, once the step size ΔE has been tested in step S₁₁ when the step size ΔE proves to be smaller than the minimum step size ΔEₘᵢₙ, in a step S₁₃ the step size ΔE is again made equal to the initial step size, while step S₁ is used as a basis. In addition, a count C is made equal to 1 in step S₁₃. From there a loop back is made to step S₇ in the procedure described above. In this step S₇ the setting for the recording intensity E is modified, so that the recording intensity E is reduced. Needless to observe that the known steps S₂, S₃, S₄ and S₅ are subsequently carried out. There may again be two situations. The found error rate ER indeed lies below the acceptable level ACC, as a result of which the recording intensity for the next test is reduced *via* the steps S₆ and S₇. However, if the error rate ER is still above the acceptable level ACC, there is tested in step S₁₀ whether the count C is actually equal to 1. If this is the case, the method is looped back to the steps S₆ and S₇, so that despite the fact that the error rate ER exceeds the acceptable level ACC, in a next test cycle the recording intensity E is lower than the previous recording intensity in a previous test cycle. Worded differently, from point E_{I} first several test cycles are performed with recording intensities E which are greater than the initial recording intensity E_{I}, after which a loop back is made to a recording intensity E which is smaller than E_{I}. The set counter with count 1 provides that a test cycle is made with an ever decreasing recording intensity E, which cycle results in the fact that a move to the left occurs in the error rate characteristic towards the flat recording window between Pₘₐₓ and Pₘᵢₙ. The moment this flat recording window has been reached, each next setting of the recording intensity E will be lower, until either the minimum adjustable recording intensity Eₘᵢₙ (cf. Fig. 7) is reached, or the minimum recording intensity Pₘᵢₙ is reached. In that case the corner of this minimum recording intensity curve is found sufficiently accurately by performing several iterative steps around this corner. Therefore, it is necessary, in step S₅, after the error rate ER has been found to be lower than the acceptable level ACC, to reset the count of the counter to zero. This is to take place between the steps S₅ and S₆ while a loop back is to be made from step S₁₀ to S₆.

By starting from the middle of the setting range of the recording intensity in accordance with the method in the preferred embodiment and by halving the step size after each iteration, the corner Pₘᵢₙ in the error rate characteristic may generally be found with precision after four or five steps. In the preferred embodiment of the method according to the invention the optimum setting for the recording intensity of the write head 14 is thus found very rapidly.

Needless to observe that there are various other methods of finding an optimum radiation intensity for the radiation beam 15. A similar method will be described hereinbelow by way of example.

In one of the methods this media calibration is performed in defined zones on the inside edge and/or outside edge of the record carrier 1. Naturally, first a test region which is to be recorded is first erased with a sufficiently high erase power, so that a start may be made in a clean test area. Then, starting from a minimum setting of the recording intensity, several sectors of, for example, 512 user bytes each are recorded in order to consider the information sufficiently reliably for each recording intensity setting, while steps of 1/10 mW each are taken. Then the sectors thus recorded are read out and the associated error rate is determined for each recording intensity value. A criterion could then be that, with a specific recording intensity, not more than a single one of the number of recorded sectors is allowed to be erroneous, that is to say, incorrigible. The minimum recording intensity may now be derived from the series of recorded sectors for which the recorded information may still be qualified as just sufficiently reliable. The recording intensity for the bottom limit of the recording window is used in the manner described hereinbefore for determining the optimum recording intensity for the write head 14. The multiplicand R which is the ratio of the optimum recording intensity to the minimum recording intensity is to be selected around 1.6.

The methods described hereinbefore are applicable to many media, such as MO are phase-change materials. However, a restriction is the group of media that have a relatively narrow recording window in the error rate characteristic. In that case one should not only determine the bottom limit of the window, but also determine the top limit of the recording window in the same manner, after which the average of the top and bottom limits can be taken as the optimum power.

## Claims

1. Method of recording signals on a record carrier (1) of a type that can be overwritten, information patterns of optically detectable marks (30,31) being recorded on the record carrier in substantially parallel tracks (4), the tracks being scanned by a radiation beam (15) for the purpose of recording the marks, the optically detectable marks being obtained by locally heating a suitable recording layer (16) of the record carrier by means of the radiation beam, the energy contents of the radiation beam being set in response to the detection of undesired signals in a test information pattern recorded with the radiation beam, in which method the radiation beam has an intensity setting range, the radiation beam being initially set (S₁, S₂) at a predetermined value within its setting range, the test information pattern being recorded (S₃) with associated recording intensitv after which this test information pattern is read (S₄) out and its error rate determined (S₄), the recording intensity is changed with a specific step (S₅;S₇;S₁₂) which depends on the error rate, after which the writing (S₃) and successively (S₄) reading of the test information pattern is effected and the error rate of the thus recorded and read test information pattern is determined (S₄) and the setting of the radiation beam is corrected (S₅;S₇;S₁₂) on the basis of the found error rate, and previous steps are repeated until a corner in the error rate intensity characteristic is found, after which an optimum intensity setting for the recording intensity of the radiation beam is established by increasing with a predetermined value a minimum recording intensity determined by the corner in the error rate intensity characteristic., characterized in that the test information pattern is a given randomly selectable data pattern, coded by means of an error detection and correction algorithm and, after reading out the test information pattern an error rate in the data pattern is established by means of an error detection and correction algorithm; in that the radiation beam initially is set in the middle of its setting range (E_{I}), that the step size of the modification of recording intensity to be selected (S₂) is reduced each time an error rate is determined and that the optimum setting for the intensity of the radiation beam is obtained by multiplying with a fixed factor the minimum recording intensity as determined (S₈) by the corner in the error rate intensity characteristic.

2. Method as claimed in Claim 1, characterized in that the reduction is a division by two.

3. Method as claimed in Claim 1 or 2, characterized in that the fixed factor is situated between the values of 1.1 and 2.2.

4. Method as claimed in Claim 3, characterized in that the factor lies around the value of 1.6.

5. Recording device for recording signal patterns in substantially parallel tracks on a record carrier (1) of a type that can be overwritten, the recording device comprising scanning means (14, 16, 18) for scanning the tracks (4) with a radiation beam (15) for the purpose of introducing in the tracks an information pattern of optically detectable marks (30, 31) which corresponds to the signal patterns, the device (19a) comprising setting means for setting the recording intensity with the aid of a setting signal to be applied to the setting means, which setting signal depends on the detection of undesired signals in a test information pattern recorded with the radiation beam, the recording device further including reading means for reading an information pattern recorded with the radiation beam and programmed data processing means (19b) for producing an initial setting signal for the setting means which set the recording intensity of the radiation beam at a predetermined value within its setting range. and for producing setting signals with which the setting range of the recording intensity of the radiation beam is passed through successively in various steps characterized in that the programmed data processing means are further programmed:
- for encoding data patterns by means of an error detection and correction algorithm,
- for determining an error rate in signal patterns belonging to a read information pattern,
- for determining a setting signal as a function of error rates
- for generating after each successive step, a new setting signal, the step size for the modification of the recording intensity being reduced each time an error rate is determined.

6. Recording device as claimed in Claim 5, characterized in that the initial step size is substantially equal to 1/4 of the setting range.

7. Recording device as claimed in preceding Claim 5, characterized in that the reduction is a division by two.

8. Recording device as claimed in one of the preceding Claims 5 to 7, characterized in that the corner in the error rate characteristic belonging to the minimum recording intensity with an acceptable error rate is iteratively found and an effective recording intensity is set by multiplying the found minimum recording intensity by a constant factor.

9. Recording device as claimed in preceding Claim 8, characterized in that the factor has a value between 1.1 and 2.2.

10. Recording device as claimed in preceding Claim 9, characterized in that the constant factor is about 1.6.

## Patentansprüche

1. Verfahren zum Aufzeichnen von Signalen auf einem Aufzeichnungsträger (1) von einem überschreibbaren Typ, wobei Informationsmuster aus optisch detektierbaren Marken (30, 31) auf dem Aufzeichnungsträger in nahezu parallelen Spuren (4) aufgezeichnet werden, wobei die Spuren zum Aufzeichnen der Marken von einem Strahlenbündel (15) abgetastet werden, wobei die optisch detektierbaren Marken durch örtliches Erwärmen einer geeigneten Aufzeichnungsschicht (16) des Aufzeichnungsträgers mit Hilfe des Strahlenbündels erhalten werden und wobei der Energiegehalt des Strahlenbündels in Reaktion auf die Detektion unerwünschter Signale in einem mit dem Strahlenbündel aufgezeichneten Testinformationsmuster eingestellt wird, in welchem Verfahren das Strahlenbündel einen Stärkeneinstellbereich hat, wobei das Strahlenbündel anfangs auf einen vorbestimmten Wert innerhalb des Einstellbereichs eingestellt wird (S₁, S₂), wobei das Testinformationsmuster mit zugehöriger Aufzeichnungsstärke aufgezeichnet wird (S₃), woraufhin dieses Testinformationsmuster ausgelesen wird (S₄) und seine Fehlerrate bestimmt wird (S₄), die Aufzeichnungsstärke mit einem von der Fehlerrate abhängenden, speziellen Schritt (S₅, S₇, S₁₂) geändert wird, woraufhin das Einschreiben (S₃) und danach das Auslesen (S₄) des Testinformationsmusters erfolgt und die Fehlerrate des so aufgezeichneten und ausgelesenen Testinformationsmusters bestimmt wird (S₄) und die Einstellung des Strahlenbündels anhand der gefundenen Fehlerrate korrigiert wird (S₅, S₇, S₁₂) und vorherige Schritte wiederholt werden, bis ein Knick in der Fehlerrate-Stärke-Kennlinie gefunden wird, woraufhin eine optimale Stärkeneinstellung für die Aufzeichnungsstärke des Strahlenbündels bestimmt wird, und zwar durch Erhöhen einer durch den Knick in der Fehlerrate-Stärke-Kennlinie bestimmten minimalen Aufzeichnungsstärke um einen vorbestimmten Wert, dadurch gekennzeichnet, daß das Testinformationsmuster ein gegebenes willkürlich wählbares Datenmuster ist, das mit Hilfe eines Fehlererkennungs- und Korrekturalgorithmus codiert worden ist, und nach Auslesen des Testinformationsmusters mit Hilfe eines Fehlererkennungs- und Korrekturalgorithmus eine Fehlerrate in dem Datenmuster festgestellt wird; daß das Strahlenbündel anfangs auf die Mitte des Einstellbereichs (E₁) eingestellt wird, daß die zu wählende (S₂) Schrittgröße der Modifikation der Aufzeichnungsstärke jedesmal, wenn eine Fehlerrate bestimmt wird, verkleinert wird und daß die optimale Einstellung für die Stärke des Strahlenbündels durch Multiplizieren der durch den Knick in der Fehlerrate-Stärke-Kennlinie bestimmten (S₈) minimalen Aufzeichnungsstärke mit einem festen Faktor erhalten wird.

2. Verfahren nach Anspruch 1, dadurch gekennzeichnet, daß die Verkleinerung eine Division durch zwei ist.

3. Verfahren nach Anspruch 1 oder 2, dadurch gekennzeichnet, daß der feste Faktor zwischen den Werten 1,1 und 2,2 liegt.

4. Verfahren nach Anspruch 3, dadurch gekennzeichnet, daß der Faktor in der Nähe des Wertes 1.6 liegt.

5. Aufzeichnungseinrichtung zum Aufzeichnen von Signalmustern in nahezu parallelen Spuren auf einem Aufzeichnungsträger (1) von einem überschreibbaren Typ, wobei die Aufzeichnungseinrichtung Abtastmittel (14, 16) zum Abtasten der Spuren mit einem Strahlenbündel (15) umfassen, mit dem Zweck, in die Spuren ein Informationsmuster aus optisch detektierbaren Marken (30, 31) einzubringen, das den Signalmustern entspricht, wobei die Einrichtung (19a) Einstellmittel zum Einstellen der Aufzeichnungsstärke mit Hilfe eines den Einstellmitteln zuzuführenden Einstellsignals umfaßt, welches Einstellsignal von der Detektion von unerwünschten Signalen in einem mit dem Strahlenbündel aufgezeichneten Testinformationsmuster abhängt, wobei die Aufzeichnungseinrichtung weiterhin Auslesemittel zum Auslesen eines mit dem Strahlenbündel aufgezeichneten Informationsmusters und programmierte Datenverarbeitungsmittel (19b) zum Erzeugen eines Anfangseinstellsignals für die Einstellmittel enthält, die die Aufzeichnungsstärke des Strahlenbündels auf einen vorbestimmten Wert innerhalb des Einstellbereichs setzen, und zum Erzeugen von Einstellsignalen, mit denen der Einstellbereich der Aufzeichnungsstärke des Strahlenbündels hintereinander in verschiedenen Schritten durchlaufen wird, dadurch gekennzeichnet, daß die programmierten Datenverarbeitungsmittel weiterhin programmiert sind:
- zum Codieren von Datenmustern mit Hilfe eines Fehlererkennungs- und Korrekturalgorithmus,
- zum Bestimmen einer Fehlerrate in zu einem ausgelesenen Informationsmuster gehörenden Signalmustern,
- zum Bestimmen eines Einstellsignals als Funktion von Fehlerraten,
- zum Erzeugen eines neuen Einstellsignals nach jedem darauffolgenden Schritt,
wobei die Schrittgröße für die Modifikation der Aufzeichnungsstärke jedesmal, wenn eine Fehlerrate bestimmt wird, verkleinert wird.

6. Aufzeichnungseinrichtung nach Anspruch 5, dadurch gekennzeichnet, daß die Anfangsschrittgröße nahezu gleich 1/4 des Einstellbereichs ist.

7. Aufzeichnungseinrichtung nach dem vorhergehenden Anspruch 5, dadurch gekennzeichnet, daß die Verkleinerung eine Division durch zwei ist.

8. Aufzeichnungseinrichtung nach einem der vorhergehenden Ansprüche 5 bis 7, dadurch gekennzeichnet, daß der zu der minimalen Aufzeichnungsstärke mit einer akzeptablen Fehlerrate gehörende Knick in der Fehlerratenkennlinie iterativ gefunden wird und eine effektive Aufzeichnungsstärke durch Multiplizieren der gefundenen minimalen Aufzeichnungsstärke mit einem konstanten Faktor eingestellt wird.

9. Aufzeichnungseinrichtung nach dem vorhergehenden Anspruch 8, dadurch gekennzeichnet, daß der Faktor einen Wert zwischen 1,1 und 2,2 hat.

10. Aufzeichnungseinrichtung nach dem vorhergehenden Anspruch 9, dadurch gekennzeichnet, daß der konstante Faktor etwa 1,6 ist.

## Revendications

1. Procédé d'enregistrement de signaux sur un support d'enregistrement (1) de type réenregistrable, les schémas d'information constitués de marques à détection optique (30, 31) étant enregistrés sur le support d'enregistrement dans des pistes sensiblement parallèles (4), les pistes étant balayées par un faisceau de rayonnement (15) en vue de l'enregistrement des marques, les marques à détection optique étant obtenues en chauffant par endroits une couche d'enregistrement appropriée (16) du support d'enregistrement au moyen du faisceau de rayonnement, l'énergie contenue dans le faisceau de rayonnement étant réglée en réaction à la détection de signaux indésirables dans un schéma d'information d'essai enregistré avec le faisceau de rayonnement, procédé dans lequel le faisceau de rayonnement a un intervalle de réglage d'intensité, le faisceau de rayonnement étant réglé initialement (S₁, S₂) à une valeur prédéterminée à l'intérieur de son intervalle de réglage, le schéma d'information d'essai étant enregistré (S₃) avec l'intensité d'enregistrement connexe, après quoi ce schéma d'information d'essai est lu (S₄) et son taux d'erreur est déterminé (S₄), l'intensité d'enregistrement est modifiée lors d'une étape spécifique (S₅, S₇, S₁₂) en fonction du taux d'erreur, puis l'écriture (S₃) et la lecture consécutive (S₄) du schéma d'information d'essai sont effectuées et le taux d'erreur du schéma d'information d'essai ainsi enregistré et lu est déterminé (S₄) et le réglage du faisceau de rayonnement est rectifié (S₅, S₇, S₁₂) sur la base du taux d'erreur constaté, et les étapes précédentes sont répétées jusqu'à ce qu'un tournant dans la caractéristique du taux d'erreur soit atteint, après quoi un réglage de l'intensité d'enregistrement optimale du faisceau de rayonnement est établi en augmentant d'une valeur prédéterminée une intensité d'enregistrement minimale déterminée par le tournant dans la caractéristique du taux d'erreur, caractérisé en ce que le schéma d'information d'essai est un schéma de données spécifique pouvant être choisi de manière aléatoire, qui est codé au moyen d'un algorithme de détection et de correction d'erreurs, en ce qu'après la lecture du schéma d'information d'essai, un taux d'erreur dans le schéma de données est déterminé au moyen d'un algorithme de détection et de correction d'erreurs, en ce que le faisceau de rayonnement est réglé initialement au milieu de son intervalle de réglage (E_{I}), en ce que la valeur de la modification de l'intensité d'enregistrement devant être sélectionnée (S₂) est réduite à chaque fois qu'un taux d'erreur est déterminé et en ce que le réglage optimal de l'intensité du faisceau de rayonnement est obtenu en multipliant par un facteur fixe l'intensité d'enregistrement minimale telle que déterminée (S₈) au moyen du tournant dans la caractéristique du taux d'erreur.

2. Procédé suivant la revendication 1, caractérisé en ce que la réduction est une division par deux.

3. Procédé suivant la revendication 1 ou 2, caractérisé en ce que le facteur fixe est compris entre les valeurs de 1,1 et 2,2.

4. Procédé suivant la revendication 3, caractérisé en ce que le facteur s'élève à environ 1,6.

5. Dispositif d'enregistrement pour enregistrer des signaux dans des pistes sensiblement parallèles sur un support d'enregistrement (1) de type réenregistrable, ce dispositif d'enregistrement comprenant un moyen de balayage (14, 16, 18) pour balayer les pistes (4) avec un faisceau de rayonnement (15) en vue d'inscrire dans les pistes un schéma d'information constitué de marques à détection optique (30, 31) qui correspond aux schémas de signaux, le dispositif (19a) comprenant un moyen de réglage pour régler l'intensité d'enregistrement à l'aide d'un signal de réglage devant être appliqué au moyen de réglage, lequel signal de réglage dépend de la détection de signaux indésirables dans un schéma d'information d'essai enregistré avec le faisceau de rayonnement, le dispositif d'enregistrement comprenant en outre un moyen de lecture pour lire un schéma d'information enregistré avec le faisceau de rayonnement et un moyen de traitement des données programmé (19b) pour produire un signal de réglage initial destiné au moyen de réglage qui règle l'intensité d'enregistrement du faisceau de rayonnement à une valeur prédéterminée à l'intérieur de son intervalle de réglage, et pour produire des signaux de réglage qui sont appliqués successivement à l'intervalle de réglage de l'intensité d'enregistrement du faisceau de rayonnement au cours de différentes étapes, caractérisé en ce que le moyen de traitement des données programmé est également programmé :
- pour coder des schémas de données au moyen d'un algorithme de détection et de correction d'erreurs;
- pour déterminer un taux d'erreur dans les schémas de signaux faisant partie d'un schéma d'information lu;
- pour déterminer un signal de réglage en fonction des taux d'erreur, et
- pour produire après chaque étape successive un nouveau signal de réglage, la valeur de la modification de l'intensité d'enregistrement étant réduite chaque fois qu'un taux d'erreur est déterminé.

6. Dispositif d'enregistrement suivant la revendication 5, caractérisé en ce que la valeur initiale de la modification équivaut essentiellement à 1/4 de l'intervalle de réglage.

7. Dispositif d'enregistrement suivant la revendication 5, caractérisé en ce que la réduction est une division par deux.

8. Dispositif d'enregistrement suivant l'une quelconque des revendications 5 à 7, caractérisé en ce que le tournant dans la caractéristique du taux d'erreur faisant partie d'une intensité d'enregistrement minimale avec un taux d'erreur acceptable est trouvé par itérations et en ce qu'une intensité d'enregistrement efficace est définie en multipliant l'intensité d'enregistrement minimale obtenue par un facteur constant.

9. Dispositif d'enregistrement suivant la revendication 8, caractérisé en ce que le facteur a une valeur comprise entre 1,1 et 2,2.

10. Dispositif d'enregistrement suivant la revendication 9, caractérisé en ce que le facteur constant s'élève environ à 1,6.
